# EUROPEAN PATENT APPLICATION

(11) **EP 4 696 556 A2**
(43) Date of publication of application: **18.02.2026**
(21) Application number: 25191648.2
(22) Date of filing: 24.07.2025
(51) Int. Cl.: B60N 2/66, B60N 2/90

(54) **VEHICLE AIR BLADDER**

(30) Priority: 14.08.2024 KR 20240108861
(71) Applicant: Daechang Seat Co., Ltd.-Dongtan, Hwaseong-si, Gyeonggi-do 18487 (KR)
(72) Inventor: CHO, Chan Ki, 25305 Pyeongchang-gun, Gangwon-do, (KR); PARK, Gun Young, 17041 Yongin-si, Gyeonggi-do, (KR); CHOI, Min Sik, 48297 Suyeong-gu, Busan, (KR); AN, Mu Hyun, 18125 Osan-si, Gyeonggi-do, (KR)
(74) Representative: Stöckeler, Ferdinand

(57) **Abstract**

Proposed is a vehicle air bladder designed to comfortably support an occupant, and that is visually appealing and makes a more positive impression. The air bladder includes a bladder part configured to include a first sheet that is joined to a seat back frame and a second sheet whose edge is joined to an edge of the first sheet, and to contract or expand on the seat back frame, and a shape-retaining part provided on each side of a width direction of the bladder part to preserve a shape of the expanded bladder part.

## Description

### BACKGROUND

### Technical Field

The present disclosure relates to a vehicle air bladder and, more particularly, to an air bladder installed in a vehicle's seat back frame.

### Description of the Related Art

In general, a seat back frame refers to the structural component of a car seat used to support the back and lumber of an occupant, and an air bladder is equipped on the seat back frame to enhance comfort and support for the occupant. The air bladder increases in volume by forcibly injecting air with an electric air pump and can be deformed to fit the occupant's physical characteristics.

Korean Patent No. 10-1701141 discloses an air lumbar support assembly.

The disclosed air lumbar support assembly is designed to be installed on the seat back frame in a vehicle seat to support the back and lower back (lumber region) of a passenger, and includes: a suspension mat installed on the seat back frame (the suspension mat is a wave-shaped plate that is curved in the width direction, but the portion that supports the lumber is formed flat); a plurality of air bladders stacked and bonded in a stepwise manner so that some portions thereof overlap on one flat side of the suspension mat; and an air supply means that is connected to the other flat side of the suspension mat and supplies air so that at least one of the air bladders protrudes toward the back of the passenger.

However, the above air bladders of the air lumbar support assembly are stacked and joined to each other in a stepwise manner so that some portions thereof overlap, which causes a problem in that the air bladders occupy a large space. Moreover, because each air bladder does not have a configuration that preserves and/or supports the inflated shape, the area that supports an occupant is narrow and is not aesthetically pleasing as the shape of the inflated air bladder approaches a circular form.

### Document of Related Art

(Patent Document 1) Korean Patent No. 10-1701141 (Registered January 24, 2017)

### SUMMARY

Accordingly, the present disclosure has been made keeping in mind the above problems occurring in the related art, and the present disclosure is intended to provide a vehicle air bladder to comfortably support an occupant. In addition, an objective of the present disclosure is to provide a vehicle air bladder that is visually appealing and makes a more positive impression.

In order to achieve the above objective, according to an embodiment of the present disclosure, there is provided a vehicle air bladder including: a bladder part configured to include a first sheet that is joined to a seat back frame and a second sheet whose edge is joined to an edge of the first sheet, and to contract or expand on the seat back frame; and a shape-retaining part provided on each side in a width direction of the bladder part to preserve a shape of the expanded bladder part.

In addition, the shape-retaining part of the vehicle air bladder according to an embodiment may include: a first support configured to have a length corresponding to a length of the bladder part, and have a first end in a width direction joined to a first inner side in a width direction of the first sheet while a second end in the width direction joined to a first inner side in a width direction of the second sheet; and a second support configured to have a length corresponding to the length of the bladder part, and have a first end in a width direction joined to a second inner side in the width direction of the first sheet while a second end in the width direction joined to a second inner side in the width direction of the second sheet, wherein the first support and the second support each have a folding line formed along a center line extending along a length direction on a side thereof facing each other.

In addition, the shape-retaining part of the vehicle air bladder according to another embodiment may include: a first support configured to have a length corresponding to a length of the bladder part, and have a first end in a width direction joined to a first end in the width direction of the bladder part while a second end in the width direction joined to the seat back frame; and a second support configured to have a length corresponding to the length of the bladder part, and have a first end in a width direction joined to a second end in the width direction of the bladder part while a second end in the width direction joined to the seat back frame, wherein the first support and the second support each have a folding line formed along a center line extending along a length direction on a side thereof facing away from each other.

In addition, a vehicle air bladder according to still another embodiment may include: a first bladder part configured to include a first sheet that is joined to a seat back frame and a second sheet whose edge is joined to an edge of the first sheet, and to contract or expand on the seat back frame; a second bladder part configured to include a third sheet having one side in contact with the second sheet and a fourth sheet whose edge is joined to an edge of the third sheet, and to contract or expand on the second sheet; and a shape-retaining part provided between the first bladder part and the second bladder part to preserve shapes of the expanded first bladder part and the second bladder part.

In addition, the shape-retaining part of the vehicle air bladder according to still another embodiment may include: a first support configured to have a length corresponding to a length of the first bladder part or the second bladder part, and have a first end in a width direction joined to a first end in a width direction of the first bladder part while a second end in the width direction joined to a first end in a width direction of the second bladder part; and a second support configured to have a length corresponding to the length of the first bladder part or the second bladder part, and have a first end in a width direction joined to a second end in the width direction of the first bladder part while a second end in the width direction joined to a second end in the width direction of the second bladder part, wherein the first support and the second support each have a folding line formed along a center line extending along a length direction on a side thereof facing each other.

A vehicle air bladder according to an embodiment of the present disclosure is provided with a shape-retaining part configured to preserve the shape of an expanded bladder part, so that the bladder part can be expanded into a predetermined shape, and the flat surface area increases in the maximum expanded bladder part. This allows an occupant to be supported more comfortably, and the expanded bladder part is visually appealing.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a perspective view of a vehicle air bladder according to an embodiment;
FIG. 2 is an exploded view of a vehicle air bladder according to an embodiment;
FIGS. 3A and 3B show the air exhaust and intake state of a vehicle air bladder according to an embodiment;
FIG. 4 is a perspective view of a vehicle air bladder according to another embodiment;
FIG. 5 is an exploded view of a vehicle air bladder according to another embodiment;
FIGS. 6A and 6B show the air exhaust and intake state of a vehicle air bladder according to another embodiment;
FIG. 7 is a perspective view of a vehicle air bladder according to still another embodiment;
FIG. 8 is an exploded view of a vehicle air bladder according to still another embodiment; and
FIGS. 9A and 9B show the air exhaust and intake state of a vehicle air bladder according to still another embodiment.

### DETAILED DESCRIPTION

The advantages and features of the present disclosure and the methods for achieving them will become apparent with reference to the embodiments described in detail below together with the accompanying drawings. However, the present disclosure is not limited to the embodiments disclosed below and may be implemented in various different forms. The embodiments are provided solely to make this disclosure complete and to fully convey the scope of the present disclosure to those skilled in the art, and the disclosure is defined solely by the scope of the claims. Like reference numerals refer to like elements throughout the specification.

### Vehicle Air Bladder 100 According to An Embodiment

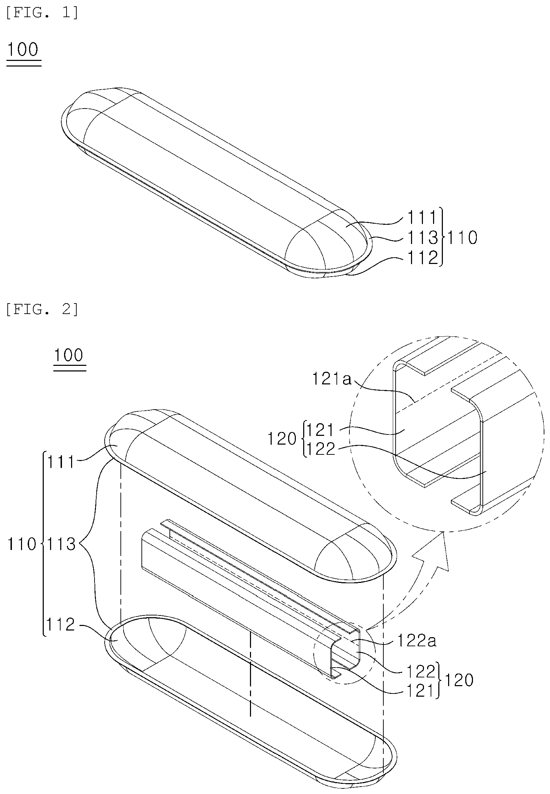

Referring to FIG. 1, which is a perspective view of a vehicle air bladder 100 (hereinafter referred to as "air bladder 100") according to an embodiment, and FIG. 2, which is an exploded view of the air bladder 100, the air bladder 100 includes a bladder part 110 and a shape-retaining part 120.

The bladder part 110 is connected to the seat back frame and includes a first sheet 111 and a second sheet 112.

The bladder part 110 may be inflated by air supplied thereinto.

The first sheet 111 has a sheet shape having a width and a length longer than the width, and may be made of thermoplastic polyurethane (TPU). One side of the first sheet 111 is joined to the seat back frame.

The second sheet 112 has an area corresponding to the first sheet 111. That is, the second sheet 112 has a sheet shape having a width and a length longer than the width, similar to the first sheet 111. In addition, the second sheet 112 may be made of thermoplastic polyurethane.

The edge of the second sheet 112 is bonded to the edge of the first sheet 111. As an example, the first sheet 111 and the second sheet 112 may be bonded by fusing the edges thereof, thereby forming a fused surface 113 on the edges of the first sheet 111 and the second sheet 112.

The shape-retaining part 120 is provided on each side of the width direction of the bladder part 110 to preserve the shape of the bladder part 110 inflated by air. The shape-retaining part 120 includes a first support 121 and a second support 122.

The first support 121 has a length corresponding to the length of the bladder part 110, and has one end in the width direction joined to one inner side in the width direction of the first sheet 111 while the other end in the width direction joined to one inner side in the width direction of the second sheet 112.

In addition, a folding line 121a may be formed on one side of the first support 121 facing the second support 122.

The folding line 121a is formed along the center line extending along the length direction of the first support 121, so that the first support 121 is foldable based on the folding line 121a. Since the folding line 121a is formed on one side of the first support 121, when the first support 121 is folded based on the folding line 121a, the two ends in the width direction of one side of the first support 121 come into contact with each other.

In addition, the first support 121 may be made of thermoplastic polyurethane.

The second support 122 has a length corresponding to the length of the bladder part 110, and has one end in the width direction joined to the other inner side in the width direction of the first sheet 111 while the other end in the width direction joined to the other inner side in the width direction of the second sheet 112.

In addition, a folding line 122a may be formed on one side of the second support 122 facing the first support 121.

The folding line 122a is formed along the center line extending along the length direction of the second support 122, so that the second support 122 is foldable based on the folding line 122a. Since the folding line 122a is formed on one side of the second support 122, when the second support 122 is folded based on the folding line 122a, the two ends in the width direction of one side of the second support 122 come into contact with each other.

In addition, the second support 122 may be made of thermoplastic polyurethane.

Because the shape-retaining part 120 supports the bladder part 110 from inside the bladder part 110, the air bladder 100 has the feature of enhanced durability compared to existing air bladders.

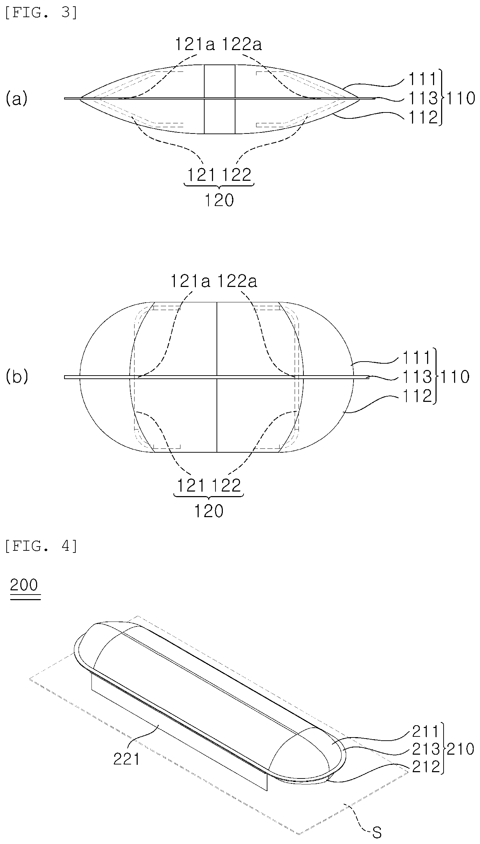

Referring to FIGS. 3A and 3B, which show the air exhaust and intake state of the air bladder 100, the air bladder 100 is described.

FIG. 3A shows the air exhaust state of the air bladder 100. In this state, the air inside the bladder part 110 is exhausted, and the bladder part 110 is flattened as the first sheet 111 and the second sheet 112 come closer. In addition, as the first support 121 is folded based on the folding line 121a, the two ends in the width direction of one side of the first support 121 come into contact with each other, and as the second support 122 is folded based on the folding line 122a, the two ends in the width direction of one side of the second support 122 come into contact with each other.

FIG. 3B shows the air intake state of the air bladder 100. In this state, air has been drawn into the bladder part 110 and the bladder part 110 becomes convex as the first sheet 111 and the second sheet 112 move away from each other. In addition, as the first support 121 and the second support 122 that are folded in FIG. 3A unfold, the width-wise inner sides of the expanding first sheet 111 and the width-wise inner sides of the expanding second sheet 112 are pulled. As a result, even if air is supplied into the bladder part 110, the bladder part 110 does not have a circular or oval shape but has a capsule shape, thereby increasing the flat area that supports an occupant and supporting the occupant more comfortably.

### Vehicle Air Bladder 200 According to Another Embodiment

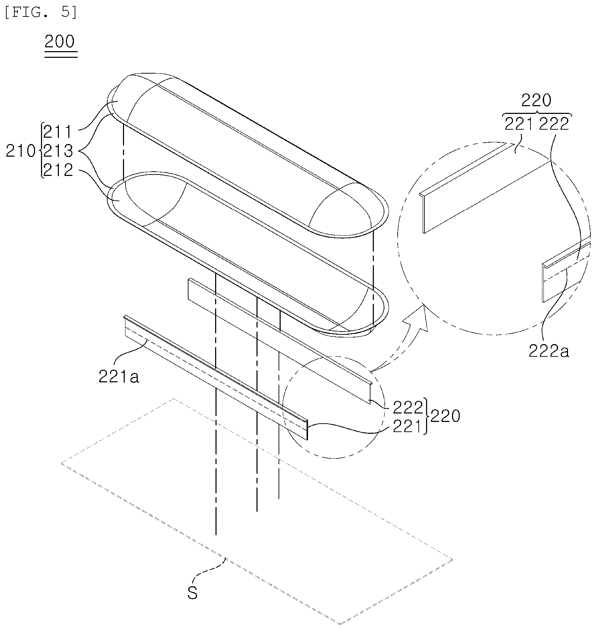

Referring to FIG. 4, which is a perspective view of a vehicle air bladder 200 (hereinafter referred to as "air bladder 200") according to an embodiment, and FIG. 5, which is an exploded view of the air bladder 200, the air bladder 200 includes a bladder part 210 and a shape-retaining part 220.

The bladder part 210 is connected to a seat back frame S and includes a first sheet 211 and a second sheet 212.

The bladder part 210 may be inflated by air supplied thereinto.

The first sheet 211 has a sheet shape having a width and a length longer than the width, and may be made of thermoplastic polyurethane (TPU). One side of the first sheet 211 is joined to the seat back frame S.

The second sheet 212 has an area corresponding to the first sheet 211. That is, the second sheet 212 has a sheet shape having a width and a length longer than the width, similar to the first sheet 211. In addition, the second sheet 212 may be made of thermoplastic polyurethane.

The edge of the second sheet 212 is bonded to the edge of the first sheet 211. As an example, the first sheet 211 and the second sheet 212 may be bonded by fusing the edges thereof, thereby forming a fused surface 213 on the edges of the first sheet 211 and the second sheet 212.

The shape-retaining part 220 is provided on each side of the width direction of the bladder part 210 to preserve the shape of the bladder part 210 inflated by air. The shape-retaining part 220 includes a first support 221 and a second support 222.

The first support 221 has a length corresponding to the length of the bladder part 210, and has one end in the width direction joined to one end in the width direction of the bladder part 210 while the other end in the width direction joined to the seat back frame S. As an example, the first support 221 may have one end in the width direction joined to the fused surface 213 on one side in the width direction of the bladder part 210, and may have the other end in the width direction joined to the seat back frame S.

In addition, a folding line 221a may be formed on one side of the first support 221 facing away from the second support 222.

The folding line 221a is formed along the center line extending along the length direction of the first support 221, so that the first support 221 is foldable based on the folding line 221a. Since the folding line 221a is formed on one side of the first support 221, when the first support 221 is folded based on the folding line 221a, the two ends in the width direction of one side of the first support 221 come into contact.

In addition, the first support 221 may be made of thermoplastic polyurethane.

The second support 222 has a length corresponding to the length of the bladder part 210, and has one end in the width direction joined to the other end in the width direction of the bladder part 210 while the other end in the width direction joined to the seat back frame S. As an example, the second support 222 may have one end in the width direction joined to the fused surface 213 on the other side in the width direction of the bladder part 210, and may have the other end in the width direction joined to the seat back frame S.

In addition, a folding line 222a may be formed on one side of the second support 222 facing away from the first support 221.

The folding line 222a is formed along the center line extending along the length direction of the second support 222, so that the second support 222 is foldable based on the folding line 222a. Since the folding line 122a is formed on one side of the second support 222, when the second support 222 is folded based on the folding line 222a, the two ends in the width direction of one side of the second support 122 come into contact with each other.

In addition, the second support 222 may be made of thermoplastic polyurethane.

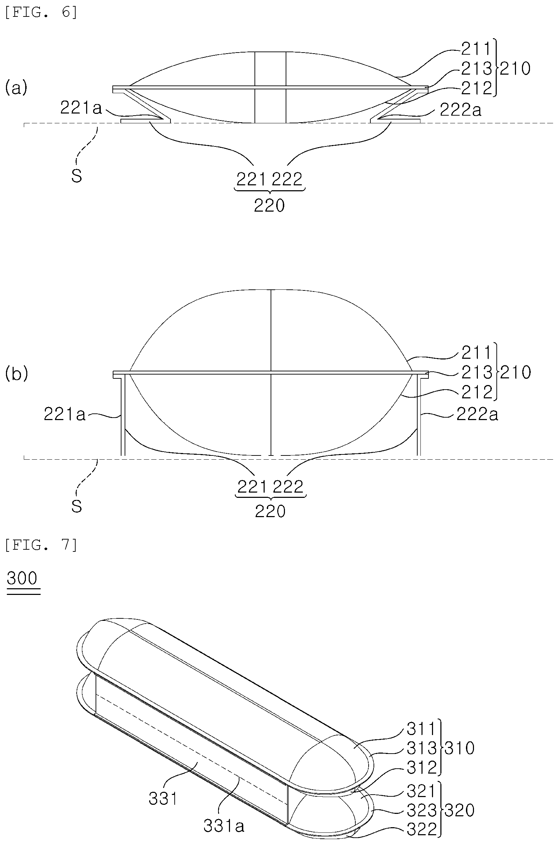

Referring to FIGS. 6A and 6B, which show the air exhaust and intake state of the air bladder 200, the air bladder 200 is described.

FIG. 6A shows the air exhaust state of the air bladder 200. In this state, the air inside the bladder part 210 is exhausted, and the bladder part 210 is flattened as the first sheet 211 and the second sheet 212 come closer. In addition, as the first support 221 is folded based on the folding line 221a, the two ends in the width direction of one side of the first support 221 come into contact with each other, and as the second support 222 is folded based on the folding line 222a, the two ends in the width direction of one side of the second support 222 come into contact with each other.

FIG. 6B shows the air intake state of the air bladder 200. In this state, air has been drawn into the bladder part 210 and the bladder part 210 becomes convex as the first sheet 211 and the second sheet 212 move away from each other. In addition, as the first support 221 and the second support 222 that are folded in FIG. 6A unfold, the width-wise ends of the expanding bladder part 210 are pulled. Due to this, even if air is supplied into the bladder part 210, the width-wise ends of the bladder part 210 do not move any further away from the seat back frame S, and thus the maximum expansion of the bladder part 210 is limited. In addition, since the bladder part 210 does not have a circular shape, the area supporting an occupant increases, so that the occupant may be supported more firmly and stably. Furthermore, the direction supported by the bladder part 210 may be adjusted by making the width of the first support 221 and the width of the second support 222 different.

### Vehicle Air Bladder 300 According to Still Another Embodiment

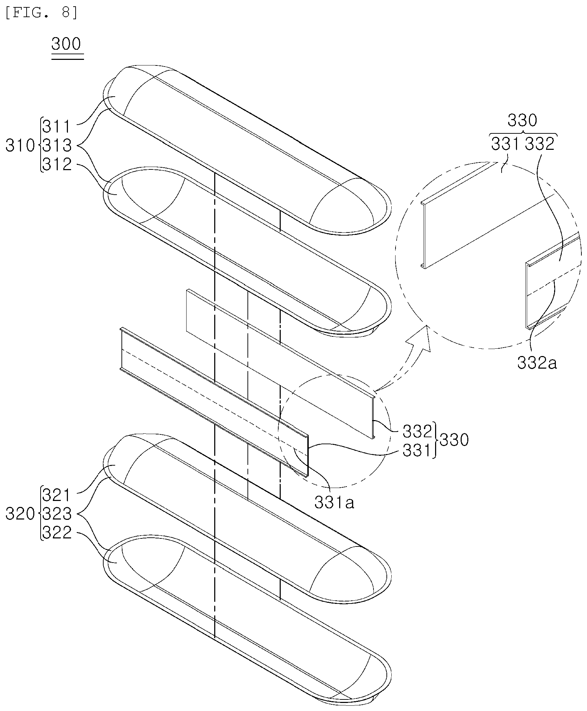

Referring to FIG. 7, which is a perspective view of a vehicle air bladder 300 (hereinafter referred to as "air bladder 300") according to an embodiment, and FIG. 8, which is an exploded view of the air bladder 300, the air bladder 300 includes a first bladder part 310, a second bladder part 320, and a shape-retaining part 330.

The first bladder part 310 is connected to a seat back frame and includes a first sheet 311 and a second sheet 312.

The first bladder part 310 may be inflated by air supplied thereinto.

The first sheet 311 has a sheet shape having a width and a length longer than the width, and may be made of thermoplastic polyurethane (TPU). One side of the first sheet 311 is joined to the seat back frame.

The second sheet 312 has an area corresponding to the first sheet 311. That is, the second sheet 312 has a sheet shape having a width and a length longer than the width, similar to the first sheet 311. In addition, the second sheet 312 may be made of thermoplastic polyurethane.

The edge of the second sheet 312 is bonded to the edge of the first sheet 311. As an example, the first sheet 311 and the second sheet 312 may be bonded by fusing the edges thereof, thereby forming a fused surface 313 on the edges of the first sheet 211 and the second sheet 312.

The second bladder part 320 is connected to the first bladder part 310 and includes a third sheet 321 and a fourth sheet 322.

The second bladder part 320 may be inflated by air supplied thereinto.

The third sheet 321 has a sheet shape having a width and a length longer than the width, and may be made of thermoplastic polyurethane. The third sheet 321 has one side contacted with the second sheet 312.

The fourth sheet 322 has an area corresponding to the first sheet 311. That is, the fourth sheet 322 has a sheet shape having a width and a length longer than the width, similar to the third sheet 321. In addition, the fourth sheet 322 may be made of thermoplastic polyurethane.

The edge of the fourth sheet 322 is bonded to the edge of the third sheet 321. As an example, the third sheet 321 and the fourth sheet 322 may be bonded by fusing the edges thereof, thereby forming a fused surface 323 on the edges of the third sheet 321 and the fourth sheet 322.

The shape-retaining part 330 is provided between the first bladder part 310 and the second bladder part 320 to preserve the shape of the first bladder part 310 and the second bladder part 320 inflated by air. The shape-retaining part 330 includes a first support 331 and a second support 332.

The first support 331 has a length corresponding to the length of the first bladder part 310 or the length of the second bladder part 320, and has one end in the width direction joined to one end in the width direction of the first bladder part 310 while the other end in the width direction joined to one end in the width direction of the second bladder part 320. As an example, the first support 331 may have one end in the width direction joined to the fused surface 313 on one side in the width direction of the first bladder part 310, and may have the other end in the width direction joined to the fused surface 323 on one side in the width direction of the second bladder part 320.

In addition, a folding line 331a may be formed on one side of the first support 331 facing away from the second support 332.

The folding line 222a may be is formed along the center line extending along the length direction of the first support 331, so that the first support 331 is foldable based on the folding line 331a. Since the folding line 331a is formed on one side of the first support 331, when the first support 331 is folded based on the folding line 331a, the two ends in the width direction of one side of the first support 331 come into contact with each other.

In addition, the first support 331 may be made of thermoplastic polyurethane.

The second support 332 has a length corresponding to the length of the first bladder part 310 or the length of the second bladder part 320, and has one end in the width direction joined to the other end in the width direction of the first bladder part 310 while the other end in the width direction joined to the other end in the width direction of the second bladder part 320. As an example, the second support 332 may have one end in the width direction joined to the fused surface 313 on the other side in the width direction of the first bladder part 310, and may have the other end in the width direction joined to the fused surface 323 on the other side in the width direction of the second bladder part 320.

In addition, a folding line 332a may be formed on one side of the second support 332 facing away from the first support 331.

The folding line 332a may be is formed along the center line extending along the length direction of the second support 332, so that the second support 332 is foldable based on the folding line 332a. Since the folding line 332a is formed on one side of the second support 332, when the second support 332 is folded based on the folding line 332a, the two ends in the width direction of one side of the second support 332 come into contact with each other.

In addition, the second support 332 may be made of thermoplastic polyurethane.

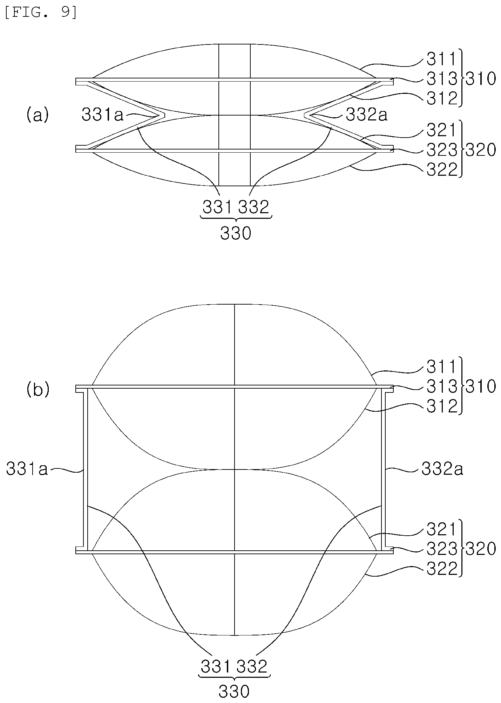

Referring to FIGS. 9A and 9B, which show the air exhaust and intake state of the air bladder 300, the air bladder 300 is described.

FIG. 9A shows the air exhaust state of the air bladder 300. In this state, the air inside the first bladder part 310 and the air inside the second bladder part 320 are exhausted, and the first bladder part 310 is flattened as the first sheet 311 and the second sheet 312 come closer whereas the second bladder part 320 is flattened as the third sheet 321 and the fourth sheet 322 come closer. In addition, as the first support 331 is folded based on the folding line 331a, the two ends in the width direction of one side of the first support 331 come into contact with each other, and as the second support 332 is folded based on the folding line 332a, the two ends in the width direction of one side of the second support 332 come into contact with each other.

FIG. 9B shows the air intake state of the air bladder 300. In this state, air has been drawn into the first bladder part 310 and the second bladder part 320, and the first bladder part 310 becomes convex as the first sheet 311 and the second sheet 312 move away from each other whereas the second bladder part 320 becomes convex as the third sheet 321 and the fourth sheet 322 move away from each other. In addition, as the first support 331 and the second support 332 that are folded in FIG. 9A unfold, the width-wise ends of the expanding first bladder part 310 and the width-wise ends of the expanding second bladder part 320 are pulled. Due to this, even if air is supplied into the first bladder part 310 and the second bladder part 320, the width-wise ends of the second bladder part 320 do not move any further away from the width-wise ends of the first bladder part 310, and thus the maximum expansion of the second bladder part 320 is limited. In addition, since the second bladder part 320 does not have a circular shape, the area supporting an occupant increases, so that the occupant may be supported more firmly and stably. Furthermore, the direction supported by the second bladder part 320 may be adjusted by making the width of the first support 331 and the width of the second support 332 different.

The expressions (terms, visualized images, etc.) used in describing the embodiments of the present disclosure have been selected solely for the instrumental purpose of enhancing understanding of the technology.

In addition, due to circumstances, the present disclosure has been described by a limited number of embodiments, and a person skilled in the art will be able to create new embodiments within a scope that does not depart from the technical idea of the present disclosure based on the described embodiments.

Therefore, the scope of the claims of the present disclosure should not be limited by some expressions appearing in the description of the present disclosure and the drawings, but should be broadly interpreted based on the original technical ideas inherent in the entire specification.

## Claims

1. A vehicle air bladder comprising:
a bladder part configured to include a first sheet that is joined to a seat back frame and a second sheet whose edge is joined to an edge of the first sheet, and to contract or expand on the seat back frame; and
a shape-retaining part provided on each side in a width direction of the bladder part to preserve a shape of the expanded bladder part.

2. The air bladder of claim 1, wherein the shape-retaining part comprises:
a first support configured to have a length corresponding to a length of the bladder part, and have a first end in a width direction joined to a first inner side in a width direction of the first sheet while a second end in the width direction joined to a first inner side in a width direction of the second sheet; and
a second support configured to have a length corresponding to the length of the bladder part, and have a first end in a width direction joined to a second inner side in the width direction of the first sheet while a second end in the width direction joined to a second inner side in the width direction of the second sheet,
wherein the first support and the second support each have a folding line formed along a center line extending along a length direction on a side thereof facing each other.

3. The air bladder of claim 1, wherein the shape-retaining part comprises:
a first support configured to have a length corresponding to a length of the bladder part, and have a first end in a width direction joined to a first end in the width direction of the bladder part while a second end in the width direction joined to the seat back frame; and
a second support configured to have a length corresponding to the length of the bladder part, and have a first end in a width direction joined to a second end in the width direction of the bladder part while a second end in the width direction joined to the seat back frame,
wherein the first support and the second support each have a folding line formed along a center line extending along a length direction on a side thereof facing away from each other.

4. A vehicle air bladder comprising:
a first bladder part configured to include a first sheet that is joined to a seat back frame and a second sheet whose edge is joined to an edge of the first sheet, and to contract or expand on the seat back frame;
a second bladder part configured to include a third sheet having one side in contact with the second sheet and a fourth sheet whose edge is joined to an edge of the third sheet, and to contract or expand on the second sheet; and
a shape-retaining part provided between the first bladder part and the second bladder part to preserve shapes of the expanded first bladder part and the second bladder part.

5. The air bladder of claim 4, wherein the shape-retaining part comprises:
a first support configured to have a length corresponding to a length of the first bladder part or the second bladder part, and have a first end in a width direction joined to a first end in a width direction of the first bladder part while a second end in the width direction joined to a first end in a width direction of the second bladder part; and
a second support configured to have a length corresponding to the length of the first bladder part or the second bladder part, and have a first end in a width direction joined to a second end in the width direction of the first bladder part while a second end in the width direction joined to a second end in the width direction of the second bladder part,
wherein the first support and the second support each have a folding line formed along a center line extending along a length direction on a side thereof facing each other.
